# EUROPÄISCHE PATENTSCHRIFT

(11) **EP 3 491 655 B1**
(45) Veröffentlichungstag und Bekanntmachung des Hinweises auf die Patenterteilung: **12.08.2020**
(21) Anmeldenummer: 17768705.0
(22) Anmeldetag: 05.09.2017
(51) Int. Cl.: H02P 6/08, H02P 27/08, H01H 3/30, H02P 7/29, H01H 3/26

(54) **MOTORVORRICHTUNG FÜR EINEN SCHALTERANTRIEB EINES ELEKTRISCHEN SCHALTERS**
MOTOR DEVICE FOR A SWITCH DRIVE OF AN ELECTRIC SWITCH
DISPOSITIF MOTEUR POUR UNE COMMANDE D'UN COMMUTATEUR ÉLECTRIQUE

(30) Priorität: 23.09.2016 DE 102016218334
(43) Veröffentlichungstag der Anmeldung: 05.06.2019
(73) Patentinhaber: Siemens Aktiengesellschaft, 80333 München (DE)
(72) Erfinder: HILKER, Thomas, 14532 Stahnsdorf (DE)
(86) Internationale Anmeldenummer: PCT/EP2017/072142
(87) Internationale Veröffentlichungsnummer: WO 2018/054672

(56) Entgegenhaltungen:
- EP-A1- 0 720 193
- EP-A2- 1 538 499
- DE-A1-102014 215 059
- FR-A1- 2 904 469

## Beschreibung

Die Erfindung betrifft eine Motorvorrichtung für einen Schalterantrieb eines elektrischen Schalters und ein Verfahren zu deren Betrieb.

Elektrische Schalter zum Schließen oder Öffnen von Strompfaden mittlerer und hoher elektrischer Spannungen und Ströme benötigen zum Bewegen von Schaltkontakten der Schalter große mechanische Energie.

Beispielsweise werden zum Bewegen der Schaltkontakte von Leistungsschaltern oft Schalterantriebe verwendet, die mechanische Energie speichern, beispielsweise Federspeicherantriebe. In einem Federspeicherantrieb wird eine Feder, beispielsweise eine Schraubenfeder, oft mit einem Motor über ein Getriebe gespannt. Die Feder wird gegen ein selbständiges Entspannen verriegelt, so dass die Energie in der Feder gespeichert bleibt. Durch eine Auslösevorrichtung kann die gespeicherte Energie freigegeben werden, indem die Verriegelung der Feder gelöst wird, so dass sich die Feder entspannt. Mit der verfügbaren gespeicherten Energie kann somit eine Schalthandlung ausgeführt werden.

Anders als Leistungsschalter bewirken Trennschalter eine definierte Unterbrechung annähernd lastfreier elektrischer Stromkreise, indem Schaltkontakte direkt, beispielsweise von einem Motor, angetrieben werden. Auf eine Speicherung von Energie wird dabei verzichtet, da eine lastfreie (leistungslose) Trennung der Schaltkontakte langsamer erfolgen kann. Die elektrischen Versorgungsspannungen von Elektromotoren für Schalterantriebe elektrischer Schalter, wie aus der EP 0 720 193 A1 bekannt, die eine Motorvorrichtung für einen Schalterantrieb nach dem Oberbegriff des Anspruchs 1 offenbart, sind durch normative Vorgaben und Anwendungsanforderungen vielfältig und unterscheiden sich neben der Spannungshöhe auch in der Spannungsform, die beispielsweise eine ein- oder dreiphasige Wechselspannung oder eine Gleichspannung sein kann. Daher werden für Schalterantriebe elektrischer Schalter unterschiedliche Motortypen und -ausführungen eingesetzt. Ansteuerungs-, Absicherungs-, Verriegelungs- und Überwachungsfunktionen für die Motoren werden durch eine Vielzahl von Bauteil- und Verdrahtungsvarianten realisiert. Die Bauteil- und Verdrahtungsvarianz erhöht die Kosten und die Fehlerrate der Installation der Motoren.

Der Erfindung liegt die Aufgabe zugrunde, eine Motorvorrichtung für einen Schalterantrieb eines elektrischen Schalters anzugeben, die für verschiedene Versorgungsspannungen von Elektromotoren einsetzbar ist.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße Motorvorrichtung für einen Schalterantrieb eines elektrischen Schalters umfasst einen bürstenlosen Drehstrommotor und eine elektronische Steuerungsvorrichtung zur Steuerung des Drehstrommotors. Die Steuerungsvorrichtung weist eine Gleichrichtereinheit zur Gleichrichtung einer Versorgungsspannung der Motorvorrichtung, wenn die Versorgungsspannung eine Wechselspannung ist, und zum Verpolungsschutz, wenn die Versorgungsspannung eine Gleichspannung ist, auf. Ferner weist die Steuerungsvorrichtung eine Spannungsmesseinheit zur Erfassung einer Gleichrichterausgangsspannung der Gleichrichtereinheit, eine Schalteinheit zur Erzeugung einer pulsweitenmodulierten Antriebswechselspannung für den Drehstrommotor aus der Gleichrichterausgangsspannung und eine Steuereinheit zur Ansteuerung der Schalteinheit in Abhängigkeit von der Gleichrichterausgangsspannung auf.

Die Motorvorrichtung kann vorteilhaft mit verschiedenen Versorgungsspannungen betrieben werden, wobei sich die Versorgungsspannungen hinsichtlich ihrer Amplitude und/oder Spannungsform unterscheiden können. Die Gleichrichtereinheit ermöglicht den wahlweisen Betrieb mit einer ein- oder mehrphasigen Versorgungswechselspannung und einer beliebig gepolten Versorgungsgleichspannung, indem sie eine Versorgungswechselspannung gleichrichtet und einen Verpolungsschutz für eine Versorgungsgleichspannung bereitstellt. Die Erzeugung einer pulsweitenmodulierten Antriebswechselspannung für den Drehstrommotor aus der Gleichrichterausgangsspannung in Abhängigkeit von der Gleichrichterausgangsspannung ermöglicht, die Antriebswechselspannung für den Drehstrommotor an die jeweilige Versorgungsspannung und an die Anforderungen der anzutreibenden Bauteile anzupassen. Dadurch wird eine weitgehende Unabhängigkeit der Motorvorrichtung von der Amplitude und Form der Versorgungsspannung und den anzutreibenden Bauteilen erreicht, so dass die Motorvorrichtung für Schalterantriebe verschiedener elektrischer Schalter eingesetzt werden kann, beispielsweise zum Spannen von Federn der Federspeicherantriebe von Leistungsschaltern oder zum direkten Antrieb von Schaltkontakten von Trennschaltern. Insbesondere kann die Anzahl von Motorvarianten für verschiedene Schalter vorteilhaft reduziert werden. Statt unterschiedlicher Motoren wird für verschiedene Schalter ein bürstenloser Drehstrommotor eingesetzt. Der Einsatz eines bürstenlosen Drehstrommotors hat gegenüber anderen Motortypen den Vorteil, dass er besonders verschleißarm ist, da sein Rotor nicht elektrisch kontaktiert werden muss. Die Erfindung reduziert zudem vorteilhaft den Änderungsaufwand bei einer nachträglichen Anspassung der Versorgungsspannung. Fertigungstechnisch entfallen vorteilhaft die Montage und Verdrahtung unterschiedlicher elektrischer Komponenten zur Überwachung und Steuerung des Motors. Durch die damit einhergehende Vereinheitlichung wird auch eine Fehlerwahrscheinlichkeit während dieser Fertigungsprozesse reduziert.

Eine Ausgestaltung der Erfindung sieht vor, dass die Steuerungsvorrichtung eine Strommesseinheit zur Erfassung eines zwischen der Schalteinheit und dem Drehstrommotor fließenden Motorstroms aufweist. Diese Ausgestaltung der Erfindung ermöglicht vorteilhaft eine Überwachung des Motorstroms, um Überlastungen und Fehlfunktionen des Drehstrommotors zu erkennen.

Eine weitere Ausgestaltung der Erfindung sieht vor, dass die Steuerungsvorrichtung eine galvanische Trenneinheit zur galvanischen Trennung des Drehstrommotors von der Steuerungsvorrichtung aufweist. Beispielsweise weist die galvanische Trenneinheit ein Relais oder ein Schütz zur galvanischen Trennung des Drehstrommotors von der Steuerungsvorrichtung auf. Diese Ausgestaltung der Erfindung ermöglicht vorteilhaft, den Drehstrommotor im Falle einer erkannten Überlastung oder Fehlfunktion sicher auszuschalten.

Eine weitere Ausgestaltung der Erfindung sieht vor, dass die Steuereinheit eine Eingangsbaugruppe aufweist, über die der Steuereinheit Eingangssignale wenigstens eines externen Gerätes zugeführt werden. Insbesondere werden der Steuereinheit über die Eingangsbaugruppe Eingangssignale eines Endlagenschalters zur Erfassung einer Endstellung des Schalterantriebs zugeführt. Diese Ausgestaltung der Erfindung ermöglicht vorteilhaft, mit der Steuereinheit für den Betrieb des jeweiligen Schalters relevante Eingangssignale zu verarbeiten. Beispielsweise kann die Steuerungsvorrichtung dadurch auf Eingangssignale wie Verriegelungsanforderungen zum Verriegeln des Schalterantriebs reagieren und den Drehstrommotor erforderlichenfalls abschalten. Eingangssignale eines Endlagenschalters zur Erfassung einer Endstellung des Schalterantriebs zur Schalteinheit ermöglichen insbesondere, mit der Steuereinheit eine Endstellung des Schalterantriebs zu überwachen.

Eine weitere Ausgestaltung der Erfindung sieht vor, dass die Steuereinheit eine Ausgangsbaugruppe aufweist, über die von der Steuereinheit Ausgangssignale an wenigstens ein externes Gerät abgegeben werden. Diese Ausgestaltung der Erfindung ermöglicht vorteilhaft, mit den Ausgangssignalen einen Zustand des Drehstrommotors und/oder der Steuerungsvorrichtung auszugeben und in anderen Baugruppen, beispielsweise in konventionellen elektrischen Steuerungsbauteilen, weiter zu verarbeiten.

Eine weitere Ausgestaltung der Erfindung sieht vor, dass die Schalteinheit für jede Phase des Drehstrommotors ein elektronisches Schaltglied aufweist, das von der Steuereinheit pulsweitenmoduliert ansteuerbar ist. Diese Ausgestaltung der Erfindung ermöglicht die Erzeugung einer pulsweitenmodulierten Antriebswechselspannung für den Drehstrommotor durch die Ansteuerung eines elektronischen Schaltgliedes für jede Phase des Drehstrommotors.

Bei dem erfindungsgemäßen Verfahren zum Betrieb einer erfindungsgemäßen Motorvorrichtung, wird mit der Gleichrichtereinheit eine Versorgungsspannung der Motorvorrichtung gleichgerichtet, wenn die Versorgungsspannung eine Wechselspannung ist, und ein Verpolungsschutz bereitgestellt, wenn die Versorgungsspannung eine Gleichspannung ist. Ferner wird mit der Spannungsmesseinheit die Gleichrichterausgangsspannung erfasst. Mit der Schalteinheit wird aus der Gleichrichterausgangsspannung eine pulsweitenmodulierte Antriebswechselspannung für den Drehstrommotor erzeugt, wobei die Schalteinheit mit der Steuereinheit in Abhängigkeit von der Gleichrichterausgangsspannung angesteuert wird. Die Vorteile des erfindungsgemäßen Verfahrens entsprechen den oben bereits genannten Vorteilen der erfindungsgemäßen Motorvorrichtung.

Eine Ausgestaltung des Verfahrens sieht vor, dass mit der Steuereinheit Pulsweitenmodulationssignale für jede Phase des Drehstrommotors erzeugt werden, deren Aussteuergrade reziprok proportional zu einer Amplitude der Gleichrichterausgangsspannung sind. Unter dem Aussteuergrad wird der Quotient aus der Pulsdauer in einer Taktperiode und der Periodendauer T der Taktperioden der Pulsweitenmodulation verstanden. Die reziproke Proportionalität der Aussteuergrade der Pulsweitenmodulation zu der Amplitude der Versorgungsspannung der Motorvorrichtung kompensiert vorteilhaft Amplitudenunterschiede verschiedener Versorgungsspannungen, so dass für verschiedene Versorgungsspannungen jeweils dieselbe Leistung des Drehstrommotors erzeugt werden kann.

Eine weitere Ausgestaltung des Verfahrens sieht vor, dass mit der Steuereinheit Pulsweitenmodulationssignale für jede Phase des Drehstrommotors erzeugt werden, deren Aussteuergrade einem Sollwert der Leistung des Drehstrommotors angepasst sind. Dadurch kann die Leistung des Drehstrommotors ebenfalls durch die Aussteuergrade der Pulsweitenmodulation vorteilhaft auf den Sollwert der Leistung eingestellt werden.

Eine weitere Ausgestaltung des Verfahrens sieht vor, dass eine Amplitude eines zwischen der Schalteinheit und dem Drehstrommotor fließenden Motorstroms erfasst wird und der Drehstrommotor ausgeschaltet wird, wenn die erfasste Amplitude des Motorstroms den Amplitudenschwellenwert überschreitet. Dadurch kann vorteilhaft das Fließen eines zu hohen Motorstroms verhindert werden.

Eine weitere Ausgestaltung des Verfahrens sieht vor, dass ein Zeitschwellenwert vorgegeben wird, eine Zeitdauer erfasst wird, während der ein Motorstrom zwischen der Schalteinheit und dem Drehstrommotor fließt, und der Drehstrommotor ausgeschaltet wird, wenn die erfasste Zeitdauer den Zeitschwellenwert überschreitet. Dadurch kann vorteilhaft das Fließen des Motorstroms während einer zu langen Zeitdauer verhindert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm einer Motorvorrichtung und eines Schalterantriebs eines elektrischen Schalters,
- FIG 2: einen schematischen Schaltplan einer Motorvorrichtung,
- FIG 3: Spannungs-Zeit-Diagramme für zwei Versorgungsspannungen einer Motorvorrichtung und entsprechende pulsweitenmodulierte Phasenspannungen eines Drehstrommotors der Motorvorrichtung, und
- FIG 4: ein Ablaufdiagramm eines Verfahrens zum Betrieb einer Motorvorrichtung.

Einander entsprechende Teile sind in den Figuren mit denselben Bezugszeichen versehen.

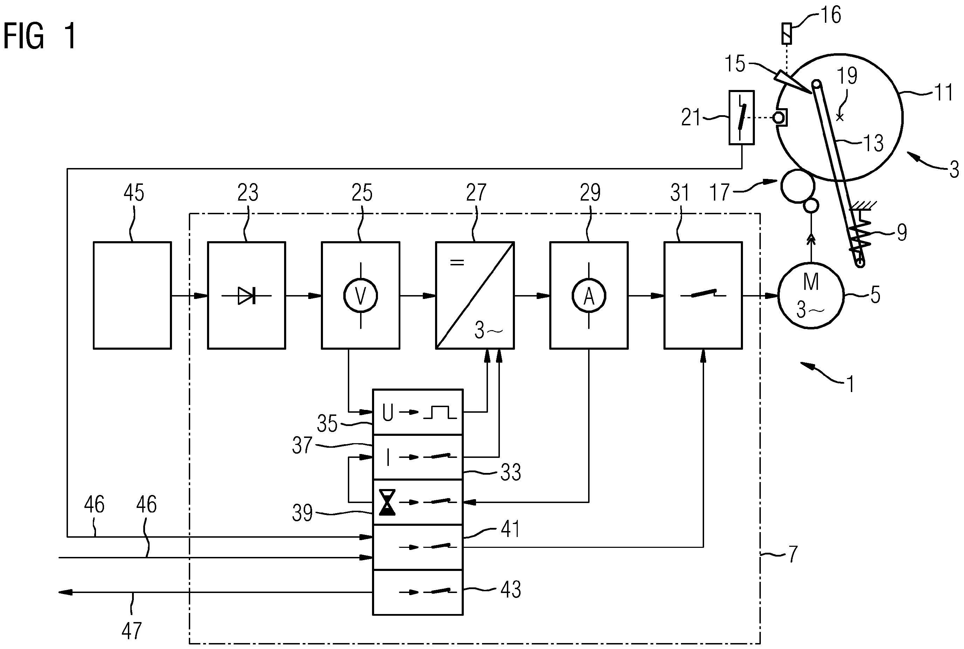

Figur 1 zeigt ein Blockdiagramm eines Schalterantriebs 3 eines elektrischen Schalters und einer Motorvorrichtung 1 für den Schalterantrieb 3. Die Motorvorrichtung 1 weist einen bürstenlosen Drehstrommotor 5 und eine elektronische Steuerungsvorrichtung 7 zur Steuerung des Drehstrommotors 5 auf. Der Schalterantrieb 3 ist ein Federspeicherantrieb und weist eine Feder 9, ein Spannrad 11, ein die Feder 9 mit dem Spannrad 11 verbindendes Kopplungselement 13, eine Verriegelungseinheit 15 und eine Auslöseeinheit 16 auf.

Der Drehstrommotor 5 ist durch ein Getriebe 17 an das Spannrad 11 gekoppelt, um das Spannrad 11 um eine Drehachse 19 in einer ersten Drehrichtung aus einer ersten Endstellung in eine zweite Endstellung zu drehen. Das Kopplungselement 13 ist als ein Kopplungsstab ausgeführt, der an einem Ende mit dem Spannrad 11 und an dem anderen Ende mit der Feder 9 verbunden ist, so dass die Feder 9 durch eine Drehung des Spannrades 11 um die Drehachse 19 in der ersten Drehrichtung gespannt wird.

Dadurch kann die Feder 9 durch den Drehstrommotor 5 gespannt werden. Durch die Verriegelungseinheit 15 kann das Spannrad 11 verriegelt werden, so dass eine Drehung des Spannrades 11 in einer der ersten Drehrichtung entgegengesetzten zweiten Drehrichtung blockiert wird, um ein Entspannen der Feder 9 zu verhindern. Beispielsweise weist die Verriegelungseinheit 15 dazu einen Verriegelungsanker auf, der das Spannrad 11 und/oder das Kopplungselement 13 in der zweiten Endstellung, in der die Feder 9 gespannt ist, arretiert. Durch die Auslöseeinheit 16 kann die Verriegelung des Spannrades 11 aufgehoben werden, um ein Entspannen der Feder 9 freizugeben. Durch das Entspannen der Feder 9 wird das Spannrad 11 aus der zweiten Endstellung in die erste Endstellung gedreht und ein (nicht dargestellter) Schaltkontakt des Schalters bewegt, um einen Strompfad zu unterbrechen. Durch einen Endlagenschalter 21 werden die Endstellungen des Spannrades 11 erfasst.

Die Steuerungsvorrichtung 7 weist eine Gleichrichtereinheit 23, eine Spannungsmesseinheit 25, eine Schalteinheit 27, eine Strommesseinheit 29, eine galvanische Trenneinheit 31 und eine Steuereinheit 33 auf. Die Steuereinheit 33 weist eine Pulsweitenmodulationseinheit 35, eine Abschalteinheit 37, eine Zeit- und Stromüberwachungseinheit 39, eine Eingangsbaugruppe 41 und eine Ausgangsbaugruppe 43 auf.

Die Gleichrichtereinheit 23 ist mit einer Versorgungsspannungsquelle 45 verbunden, von der die Motorvorrichtung 1 mit einer Versorgungsspannung U1, U2 versorgt wird. Die Versorgungsspannungsquelle 45 ist eine ein- oder mehrphasige Wechselspannungsquelle oder eine Gleichspannungsquelle.

Mit der Gleichrichtereinheit 23 wird die Versorgungsspannung U1, U2 gleichgerichtet, wenn die Versorgungsspannung U1, U2 eine Wechselspannung ist, und ein Verpolungsschutz bereitgestellt, wenn die Versorgungsspannung U1, U2 eine Gleichspannung ist, so dass von der Gleichrichtereinheit 23 eine Gleichrichterausgangsspannung ausgegeben wird, die eine Gleichspannung mit einer vorgegebenen Polarität ist. Eine von der vorgegebenen Polarität abweichende Polarität einer Versorgungsspannung U1, U2, die eine Gleichspannung ist, oder eines Anteils einer Versorgungsspannung U1, U2, die eine Wechselspannung ist, wird von der Gleichrichtereinheit 23 in die vorgegebene Polarität umgewandelt.

Mit der Spannungsmesseinheit 25 wird eine Amplitude der Gleichrichterausgangsspannung erfasst. Die Spannungsmesseinheit 25 ist eine elektrische oder elektronische Schaltung zur Ermittelung der Amplitude der Gleichrichterausgangsspannung und weist beispielsweise einen Spannungsteiler auf.

Mit der Schalteinheit 27 wird aus der Gleichrichterausgangsspannung eine dreiphasige pulsweitenmodulierte Antriebswechselspannung für den Drehstrommotor 5 erzeugt. Dazu wird die Schalteinheit 27 mit der Steuereinheit 33 in Abhängigkeit von der mit der Spannungsmesseinheit 25 erfassten Amplitude der Gleichrichterausgangsspannung angesteuert.

Mit der Strommesseinheit 29 wird ein zwischen der Schalteinheit 27 und dem Drehstrommotor 5 fließender Motorstrom erfasst. Die Strommesseinheit 29 weist beispielsweise eine Wandlerspule oder einen Shunt-Widerstand auf.

Mit der galvanischen Trenneinheit 31 kann der Drehstrommotor 5 galvanisch von der Steuerungsvorrichtung 7 getrennt werden. Die Trenneinheit 31 weist beispielsweise für jede Phase des Drehstrommotors 5 ein Relais oder ein Schütz zur galvanischen Trennung eines Phasenleiters der Phase von der Steuerungsvorrichtung 7 auf.

Mit der Pulsweitenmodulationseinheit 35 der Steuereinheit 33 werden in Abhängigkeit von der Gleichrichterausgangsspannung für jede Phase des Drehstrommotors 5 Pulsweitenmodulationssignale erzeugt, mit denen die Schalteinheit 27 angesteuert wird.

Mit der Zeit- und Stromüberwachungseinheit 39 der Steuereinheit 33 wird der von der Strommesseinheit 29 erfasste Motorstrom ausgewertet. Dabei werden eine Amplitude des Motorstroms und eine Zeitdauer, während der der Motorstrom fließt, ermittelt.

Mit der Abschalteinheit 37 der Steuereinheit 33 wird der Motorstrom über die Schalteinheit 27 abgeschaltet, wenn die Amplitude des Motorstroms einen vorgegebenen Amplitudenschwellenwert überschreitet, oder wenn die Zeitdauer, während der der Motorstrom fließt, einen vorgegebenen Zeitschwellenwert überschreitet.

Über die Eingangsbaugruppe 41 der Steuereinheit 33 werden der Steuereinheit 33 Eingangssignale 46 von wenigstens einem externen Gerät zugeführt. Insbesondere werden der Steuereinheit 33 über die Eingangsbaugruppe 41 Eingangssignale 46 von dem Endlagenschalter 21 zugeführt. In Abhängigkeit von Eingangssignalen wird von der Eingangsbaugruppe 41 die Trenneinheit 31 aktiviert, um den Drehstrommotor 5 galvanisch von der Steuerungsvorrichtung 7 zu trennen.

Über die Ausgangsbaugruppe 43 werden von der Steuereinheit 33 Ausgangssignale 47 an wenigstens ein externes Gerät abgegeben. Mit einem Ausgangssignal 47 wird beispielsweise ein Zustand des Drehstrommotors 5 und/oder ein Zustand der Steuerungsvorrichtung 7 und/oder ein Zustand des Schalterantriebs 3 übermittelt.

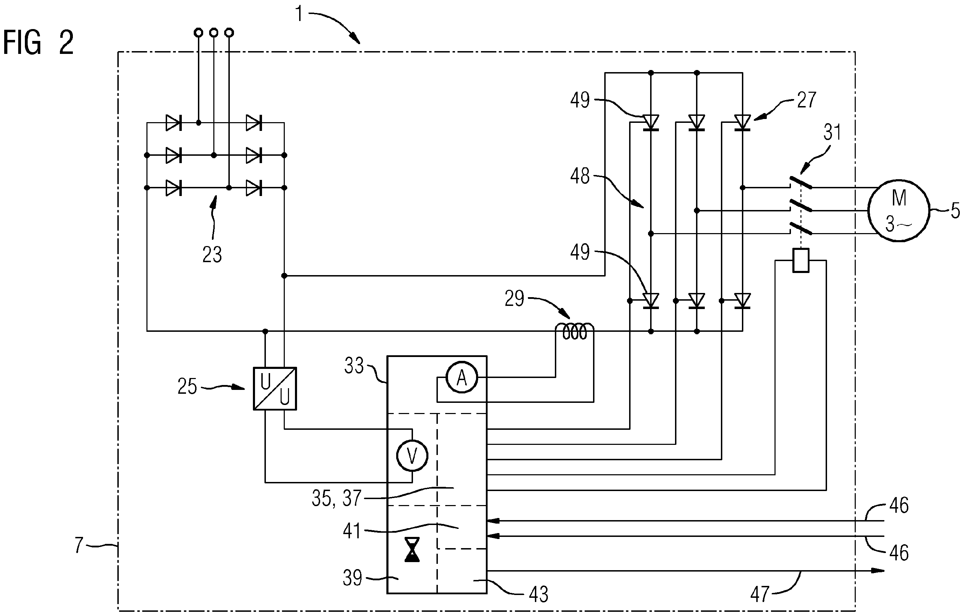

Figur 2 zeigt einen Schaltplan eines Ausführungsbeispiels einer Motorvorrichtung 1. In diesem Ausführungsbeispiel sind die Spannungsmesseinheit 25 und die Strommesseinheit 29 zumindest teilweise in die Steuereinheit 33 integriert. Die Schalteinheit 27 weist für jede Phase des Drehstrommotors 5 ein elektronisches Schaltglied 48 auf, das von der Steuereinheit 33 ansteuerbar ist. Jedes Schaltglied 48 ist als eine Halbbrücke mit zwei elektronischen Schaltelementen 49, die von der Steuereinheit 33 ansteuerbar sind, ausgebildet.

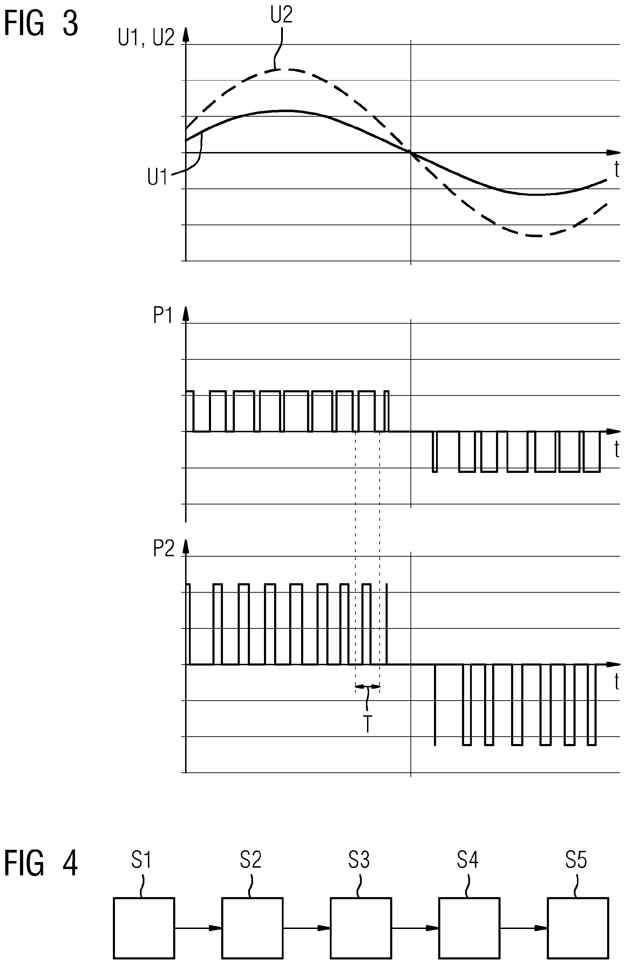

Figur 3 zeigt beispielhaft Spannungs-Zeit-Diagramme zweier verschiedener Versorgungsspannungen U1, U2 der Motorvorrichtung 1 und zweier pulsweitenmodulierter Phasenspannungen P1, P2 einer Phase des Drehstrommotors 5 der Motorvorrichtung 1 in Abhängigkeit von einer Zeit t. Beide Versorgungsspannungen U1, U2 sind einphasige sinusförmige Wechselspannungen. Eine erste Versorgungsspannung U1 hat eine halb so große Amplitude wie die zweite Versorgungsspannung U2.

Die erste pulsweitenmodulierte Phasenspannung P1 wird von der Schalteinheit 27 aus der gleichgerichteten ersten Versorgungsspannung U1 erzeugt. Die zweite pulsweitenmodulierte Phasenspannung P2 wird von der Schalteinheit 27 aus der gleichgerichteten zweiten Versorgungsspannung U2 erzeugt.

Die pulsweitenmodulierten Phasenspannungen P1, P2 unterscheiden sich voneinander durch die Pulshöhen der Rechteckpulse und die Aussteuergrade in den einzelnen Taktperioden der Pulsweitenmodulation. Unter dem Aussteuergrad in einer Taktperiode wird der Quotient aus der Pulsdauer in der Taktperiode und der Periodendauer T der Taktperioden verstanden. Der Aussteuergrad wird in Abhängigkeit von der Zeit t sinusförmig moduliert, um eine sinusartige Antriebsspannung für den Drehstrommotor 5 zu erzeugen. Die Frequenz dieser Modulation des Aussteuergrades ist im Allgemeinen verschieden von der Frequenz der jeweiligen Versorgungsspannung U1, U2 und wird durch den Sollwert der Frequenz der zu erzeugenden sinusartigen Antriebsspannung für den Drehstrommotor 5 festgelegt (im in Figur 3 dargestellten Beispiel weisen die Versorgungsspannungen U1, U2 und die zu erzeugende sinusartige Antriebsspannung für den Drehstrommotor 5 jedoch dieselbe Frequenz auf).

Die Pulshöhe der Rechteckpulse ist zwangsläufig proportional zu der Amplitude der Versorgungsspannung U1, U2. Daher ist die Pulshöhe der Rechteckpulse der ersten pulsweitenmodulierten Phasenspannung P1 halb so groß wie die Pulshöhe der Rechteckpulse der zweiten pulsweitenmodulierten Phasenspannung P2.

Die Aussteuergrade in den einzelnen Taktperioden sind reziprok proportional zu der Amplitude der Versorgungsspannung U1, U2, so dass der Aussteuergrad in einer Taktperiode der ersten pulsweitenmodulierten Phasenspannung P1 jeweils doppelt so groß wie der Aussteuergrad in korrespondierenden Taktperiode der zweiten pulsweitenmodulierten Phasenspannung P2 ist. Die Aussteuergrade für die jeweilige Versorgungsspannung U1, U2 werden von der Pulsweitenmodulationseinheit 35 der Steuereinheit 33 in Abhängigkeit von der Gleichrichterausgangsspannung der Gleichrichtereinheit 23 ermittelt und zu Pulsweitenmodulationssignalen verarbeitet, mit denen die Schalteinheit 27 angesteuert wird.

Die reziproke Proportionalität der Aussteuergrade der Pulsweitenmodulation zu der Amplitude der Versorgungsspannung U1, U2 der Motorvorrichtung 1 kompensiert Amplitudenunterschiede verschiedener Versorgungsspannungen U1, U2, so dass für verschiedene Versorgungsspannungen U1, U2 jeweils dieselbe Leistung des Drehstrommotors 5 erzeugt wird. Die Aussteuergrade der Pulsweitenmodulation werden ferner an einen Sollwert der Leistung des Drehstrommotors 5 angepasst.

Figur 4 zeigt ein Ablaufdiagramm eines Verfahrens zum Betrieb der Motorvorrichtung 1. In einem ersten Verfahrensschritt S1 wird eine Versorgungsspannung U1, U2 an einen Eingang der Steuerungsvorrichtung 7 gelegt. In einem zweiten Verfahrensschritt S2 wird die Versorgungsspannung U1, U2 mit der Gleichrichtereinheit 23 gleichgerichtet, wenn die Versorgungsspannung U1, U2 eine Wechselspannung ist, bzw. umgepolt, wenn die Versorgungsspannung U eine verpolte Gleichspannung ist. In einem dritten Verfahrensschritt S3 wird mit der Spannungsmesseinheit 25 die Amplitude der Gleichrichterausgangsspannung erfasst. In einem vierten Verfahrensschritt S4 werden mit der Pulsweitenmodulationseinheit 35 der Steuereinheit 33 die Aussteuergrade und Periodendauer T der Pulsweitenmodulation in Abhängigkeit von der erfassten Gleichrichterausgangsspannung parametrisiert und in ein Pulsweitenmodulationssignal zur Ansteuerung der Schalteinheit 27 umgewandelt. In einem fünften Verfahrensschritt S5 wird die Schalteinheit 27 mit dem Pulsweitenmodulationssignal angesteuert, und mit der Schalteinheit 27 wird aus der Gleichrichterausgangsspannung eine dreiphasige pulsweitenmodulierte Antriebswechselspannung für den Drehstrommotor 5 erzeugt, mit der der Drehstrommotor 5 angetrieben wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Motorvorrichtung (1) für einen Schalterantrieb (3) eines elektrischen Schalters, die Motorvorrichtung (1) umfassend
- einen bürstenlosen Drehstrommotor (5)
- und eine elektronische Steuerungsvorrichtung (7) zur Steuerung des Drehstrommotors (5),
- die Steuerungsvorrichtung (7) aufweisend:
- eine Gleichrichtereinheit (23) zur Gleichrichtung einer Versorgungsspannung (U1, U2) der Motorvorrichtung (1), wenn die Versorgungsspannung (U1, U2) eine Wechselspannung ist, und zum Verpolungsschutz, wenn die Versorgungsspannung (U1, U2) eine Gleichspannung ist,
- eine Spannungsmesseinheit (25) zur Erfassung einer Gleichrichterausgangsspannung der Gleichrichtereinheit (23),
- eine Schalteinheit (27) zur Erzeugung einer pulsweitenmodulierten Antriebswechselspannung für den Drehstrommotor (5) aus der Gleichrichterausgangsspannung
- und eine Steuereinheit (33) zur Ansteuerung der Schalteinheit (27) in Abhängigkeit von der Gleichrichterausgangsspannung,
**dadurch gekennzeichnet, dass**
mit der Steuereinheit (33) Pulsweitenmodulationssignale für jede Phase des Drehstrommotors (5) erzeugbar sind, deren Aussteuergrade reziprok proportional zu einer Amplitude der Gleichrichterausgangsspannung sind.

2. Motorvorrichtung (1) nach Anspruch 1,
**dadurch gekennzeichnet , dass**
die Steuerungsvorrichtung (7) eine Strommesseinheit (29) zur Erfassung eines zwischen der Schalteinheit (27) und dem Drehstrommotor (5) fließenden Motorstroms aufweist.

3. Motorvorrichtung (1) nach Anspruch 1 oder 2,
**dadurch gekennzeichnet, dass**
die Steuerungsvorrichtung (7) eine galvanische Trenneinheit (31) zur galvanischen Trennung des Drehstrommotors (5) von der Steuerungsvorrichtung (7) aufweist.

4. Motorvorrichtung (1) nach Anspruch 3,
dadur ch gekennzeichnet, dass
die galvanische Trenneinheit (31) ein Relais oder ein Schütz zur galvanischen Trennung des Drehstrommotors (5) von der Steuerungsvorrichtung (7) aufweist.

5. Motorvorrichtung (1) nach einem der vorhergehenden Ansprüche,
**dadurch gekennzeichnet, dass**
die Steuereinheit (33) eine Eingangsbaugruppe (41) aufweist, über die der Steuereinheit (33) Eingangssignale (46) wenigstens eines externen Gerätes zugeführt werden.

6. Motorvorrichtung (1) nach Anspruch 5,
**dadurch gekennzeichnet,,dass**
der Steuereinheit (33) über die Eingangsbaugruppe (41) Eingangssignale (46) eines Endlagenschalters (21) zur Erfassung einer Endstellung des Schalterantriebs (3) zugeführt werden.

7. Motorvorrichtung (1) nach einem der vorhergehenden Ansprüche,
**dadurch gekennzeichnet, dass**
die Steuereinheit (33) eine Ausgangsbaugruppe (43) aufweist, über die von der Steuereinheit (33) Ausgangssignale (47) an wenigstens ein externes Gerät abgegeben werden.

8. Motorvorrichtung (1) nach einem der vorhergehenden Ansprüche,
**dadurch gekennzeichnet, dass**
die Schalteinheit (27) für jede Phase des Drehstrommotors (5) ein elektronisches Schaltglied (48) aufweist, das von der Steuereinheit (33) pulsweitenmoduliert ansteuerbar ist.

9. Verfahren zum Betrieb einer gemäß einem der vorhergehenden Ansprüche ausgebildeten Motorvorrichtung (1), wobei
- mit der Gleichrichtereinheit (23) eine Versorgungsspannung (U1, U2) der Motorvorrichtung (1) gleichgerichtet wird, wenn die Versorgungsspannung (U1, U2) eine Wechselspannung ist, und ein Verpolungsschutz bereitgestellt wird, wenn die Versorgungsspannung (U1, U2) eine Gleichspannung ist,
- mit der Spannungsmesseinheit (25) die Gleichrichterausgangsspannung erfasst wird
- und mit der Schalteinheit (27) aus der Gleichrichterausgangsspannung eine pulsweitenmodulierte Antriebswechselspannung für den Drehstrommotor (5) erzeugt wird,
- wobei die Schalteinheit (27) mit der Steuereinheit (33) in Abhängigkeit von der Gleichrichterausgangsspannung angesteuert wird.

10. Verfahren nach Anspruch 9,
**dadurch gekennzeichnet, dass**
mit der Steuereinheit (33) Pulsweitenmodulationssignale für jede Phase des Drehstrommotors (5) erzeugt werden, deren Aussteuergrade einem Sollwert der Leistung des Drehstrommotors (5) angepasst sind.

11. Verfahren nach einem der Ansprüche 9 oder 10,
**dadurch gekennzeichnet, dass**
ein Amplitudenschwellenwert vorgegeben wird, eine Amplitude eines zwischen der Schalteinheit (27) und dem Drehstrommotor (5) fließenden Motorstroms erfasst wird und der Drehstrommotor (5) ausgeschaltet wird, wenn die erfasste Amplitude des Motorstroms den Amplitudenschwellenwert überschreitet.

12. Verfahren nach einem der Ansprüche 9 bis 11,
**dadurch gekennzeichnet, dass**
ein Zeitschwellenwert vorgegeben wird, eine Zeitdauer erfasst wird, während der ein Motorstrom zwischen der Schalteinheit (27) und dem Drehstrommotor (5) fließt, und der Drehstrommotor (5) ausgeschaltet wird, wenn die erfasste Zeitdauer den Zeitschwellenwert überschreitet.

## Claims

1. Motor device (1) for a switch actuator (3) of an electric switch, the motor device (1) comprising
- a brushless three-phase motor (5)
- and an electronic control device (7) for controlling the three-phase motor (5),
- the control device (7) having:
- a rectifier unit (23) for rectifying a supply voltage (U1, U2) of the motor device (1) when the supply voltage (U1, U2) is an AC voltage, and for protecting against polarity reversal when the supply voltage (U1, U2) is a DC voltage,
- a voltage measurement unit (25) for recording a rectifier output voltage of the rectifier unit (23),
- a switch unit (27) for generating a pulse width-modulated drive AC voltage for the three-phase motor (5) from the rectifier output voltage
- and a control unit (33) for driving the switch unit (27) depending on the rectifier output voltage,
**characterized in that**
the control unit (33) is able to generate pulse width modulation signals for each phase of the three-phase motor (5) whose degrees of modulation are inversely proportional to an amplitude of the rectifier output voltage.

2. Motor device (1) according to Claim 1,
**characterized in that**
the control device (7) has a current measurement unit (29) for recording a motor current flowing between the switch unit (27) and the three-phase motor (5).

3. Motor device (1) according to Claim 1 or 2,
**characterized in that**
the control device (7) has a galvanic isolation unit (31) for galvanically isolating the three-phase motor (5) from the control device (7).

4. Motor device (1) according to Claim 3,
**characterized in that**
the galvanic isolation unit (31) has a relay or a contactor for galvanically isolating the three-phase motor (5) from the control device (7).

5. Motor device (1) according to one of the preceding claims,
**characterized in that**
the control unit (33) has an input assembly (41) by way of which input signals (46) from at least one external device are fed to the control unit (33).

6. Motor device (1) according to Claim 5,
**characterized in that**
input signals (46) from an end position switch (21) for recording an end position of the switch actuator (3) are fed to the control unit (33) via the input assembly (41).

7. Motor device (1) according to one of the preceding claims,
**characterized in that**
the control unit (33) has an output assembly (43) by way of which output signals (47) are output from the control unit (33) to at least one external device.

8. Motor device (1) according to one of the preceding claims,
**characterized in that**
the switch unit (27) has an electronic switch element (48), which is able to be driven by the control unit (33) using pulse width modulation, for each phase of the three-phase motor (5).

9. Method for operating a motor device (1) designed according to one of the preceding claims, wherein
- the rectifier unit (23) rectifies a supply voltage (U1, U2) of the motor device (1) when the supply voltage (U1, U2) is an AC voltage, and provides protection against polarity reversal when the supply voltage (U1, U2) is a DC voltage,
- the voltage measurement unit (25) records the rectifier output voltage
- and the switch unit (27) generates a pulse width-modulated drive AC voltage for the three-phase motor (5) from the rectifier output voltage,
- wherein the switch unit (27) is driven by the control unit (33) depending on the rectifier output voltage.

10. Method according to Claim 9,
**characterized in that**
the control unit (33) generates pulse width modulation signals for each phase of the three-phase motor (5) whose degrees of modulation are adapted to a setpoint value of the power of the three-phase motor (5).

11. Method according to either of Claims 9 and 10,
**characterized in that**
an amplitude threshold value is specified, an amplitude of a motor current flowing between the switch unit (27) and the three-phase motor (5) is recorded and the three-phase motor (5) is deactivated when the recorded amplitude of the motor current exceeds the amplitude threshold value.

12. Method according to one of Claims 9 to 11,
**characterized in that**
a time threshold value is specified, a duration for which a motor current flows between the switch unit (27) and the three-phase motor (5) is recorded and the three-phase motor (5) is deactivated when the recorded duration exceeds the time threshold value.

## Revendications

1. Dispositif ( 1 ) moteur d'un entraînement d'un interrupteur électrique, le dispositif ( 1 ) moteur comprenant
- un moteur ( 5 ) à courant triphasé sans balai
- et un dispositif ( 7 ) électronique de commande pour la commande du moteur ( 5 ) à courant triphasé,
- le dispositif ( 7 ) de commande comportant :
- une unité ( 23 ) de redresseur pour le redressement d'une tension ( U1, U2 ) d'alimentation du dispositif ( 1 ) moteur lorsque la tension ( U1, U2 ) d'alimentation est une tension alternative et pour la polarisation lorsque la tension ( U1, U2 ) d'alimentation est une tension continue,
- une unité ( 25 ) de mesure de la tension pour relever une tension de sortie de redresseur de l'unité ( 23 ) à redresseur,
- une unité ( 27 ) de coupure pour la production d'une tension alternative d'entraînement modulé en largeur d'impulsion pour le moteur ( 5 ) à courant triphasé à partir de la tension de sortie du redresseur
- et une unité ( 33 ) de commande pour commander l'unité ( 27 ) de coupure en fonction de la tension de sortie du redresseur,
**caractérisé en ce que**,
par l'unité ( 33 ) de commande, peuvent être produits des signaux de modulation en largeur d'impulsion pour chaque phase du moteur ( 5 ) à courant triphasé, dont les degrés de commande sont inversement proportionnels à une amplitude de la tension de sortie du redresseur.

2. Dispositif ( 1 ) moteur suivant la revendication 1,
**caractérisé en ce que**
le dispositif ( 7 ) de commande a une unité ( 29 ) de mesure de courant pour relever un courant du moteur passant entre l'unité ( 27 ) de coupure et le moteur ( 5 ) à courant triphasé.

3. Dispositif ( 1 ) moteur suivant la revendication 1 ou 2,
**caractérisé en ce que**
le dispositif ( 7 ) de commande a une unité ( 31 ) de séparation galvanique pour la séparation galvanique du moteur ( 5 ) à courant triphasé du dispositif ( 7 ) de commande.

4. Dispositif ( 1 ) moteur suivant la revendication 3,
**caractérisé en ce que**
l'unité ( 31 ) de séparation galvanique a un relais ou un contacteur pour la séparation galvanique du moteur ( 5 ) à courant triphasé du dispositif ( 7 ) de commande.

5. Dispositif ( 1 ) moteur suivant l'une des revendications précédentes,
**caractérisé en ce que**
l'unité ( 33 ) de commande a un module ( 41 ) d'entrée, par lequel des signaux ( 46 ) d'entrée d'au moins un appareil extérieur peuvent être envoyés à l'unité ( 33 ) de commande.

6. Dispositif ( 1 ) moteur suivant la revendication 5,
**caractérisé en ce que**
des signaux ( 46 ) d'entrée d'un interrupteur ( 21 ) de fin de course peuvent être envoyés à l'unité ( 33 ) de commande par le module ( 41 ) d'entrée, afin de détecter une de fin de course de l'entraînement ( 3 ) de l'interrupteur.

7. Dispositif ( 1 ) moteur suivant l'une des revendications précédentes,
**caractérisé en ce que**
l'unité ( 33 ) de commande a un module ( 43 ) de sortie, par lequel les signaux ( 47 ) de sortie de l'unité ( 33 ) de commande peuvent être donnés à au moins un appareil extérieur.

8. Dispositif ( 1 ) moteur suivant l'une des revendications précédentes,
**caractérisé en ce que**
l'unité ( 27 ) de coupure a, pour chaque phase du moteur ( 5 ) à courant triphasé, un élément ( 48 ) électronique de coupure, qui peut être commandé de manière modulée en largeur d'impulsion par l'unité ( 33 ) de commande.

9. Procédé pour faire fonctionner un dispositif ( 1 ) moteur constitué suivant l'une des revendications précédentes, dans lequel
- on redresse, par l'unité ( 23 ) à redresseur, une tension ( U1, U2 ) d'alimentation du dispositif ( 1 ) moteur, si la tension ( U1, U2 ) d'alimentation est une tension alternative, et on procure une polarisation, si la tension ( U1, U2 ) d'alimentation est une tension continue,
- par l'unité ( 25 ) de mesure de la tension, on relève la tension de sortie du redresseur
- et par l'unité ( 27 ) de coupure, on produit, à partir de la tension de sortie du redresseur, une tension alternative modulée en largeur d'impulsion d'entraînement du moteur ( 5 ) à courant triphasé,
- dans lequel on commande l'unité ( 27 ) de coupure par l'unité ( 33 ) de commande en fonction de la tension de sortie du redresseur.

10. Procédé suivant la revendication 9,
**caractérisé en ce que**,
par l'unité ( 33 ) de commande, on produit des signaux de modulation en largeur d'impulsions pour chaque phase du moteur ( 5 ) à courant triphasé, dont les degrés de commande sont adaptés à une valeur de consigne de la puissance du moteur ( 5 ) à courant triphasé.

11. Procédé suivant l'une des revendications 9 ou 10,
**caractérisé en ce que**
l'on prescrit une valeur de seuil d'amplitude, on relève une amplitude d'un courant du moteur passant entre l'unité ( 27 ) de coupure et le moteur ( 5 ) à courant triphasé et on met hors circuit le moteur ( 5 ) à courant triphasé, si l'amplitude détectée du courant du moteur dépasse la valeur de seuil de l'amplitude.

12. Procédé suivant l'une des revendications 9 à 11,
**caractérisé en ce que**
l'on prescrit une valeur de seuil temporelle, on relève une durée pendant laquelle un courant de moteur passe entre l'unité ( 27 ) de coupure et le moteur ( 5 ) à courant triphasé et on met en circuit le moteur ( 5 ) à courant triphasé, si la durée relevée dépasse la valeur de seuil temporelle.
